# EUROPEAN PATENT APPLICATION

(11) **EP 1 454 835 A1**
(43) Date of publication of application: **08.09.2004**
(21) Application number: 02783585.9
(22) Date of filing: 21.11.2002
(51) Int. Cl.: B65D 30/02

(54) **PACKAGING BAG AND METHOD FOR PRODUCTION THEREOF**

(30) Priority: 22.11.2001 JP 2001357767
(71) Applicant: FUJIMORI KOGYO CO., LTD., Tokyo 103-0002 (JP)
(72) Inventor: SUZUKI, Toyoaki c/o Fujimori Kogyo Co. Ltd., Chuo-ku, Tokyo 103- 0002 (JP)
(74) Representative: Stoner, Gerard Patrick
(86) International application number: PCT/JP2002/012168
(87) International publication number: WO 2003/043895

(57) **Abstract**

A packaging bag, characterized in that it comprises 2 sheets of resin film (2,2) having innermost layers (2a, 2a) made from one or more resins selected from the group consisting of a polyester, a polyamide, a polyacrylonitrile, a polycarbonate, a cyclic polyolefin and a polyfluoroethylene, the 2 sheets of resin film are arranged so that the innermost layers (2a, 2a) face each other in the inner sides thereof, and peripheral edge portions of the two resin films (2,2) are bound to each other via a peripheral edge adhesion section (3) comprising a thermoplastic resin capable of melting and adhering to the resin films (2, 2).

## Description

### TECHNICAL FIELD

The present invention relates to a packaging bag and a method for producing the same. More specifically, the invention relates to a packaging bag which has flexibility and to which ingredients of a solution filled therein as a cotent are hardly adsorbed even when the packaging bag is used for liquid medicines, intravenous solutions and so on, and to the manufacturing method thereof.

### BACKGROUND ART

Conventionally, as containers for preventing ingredients filled therein from adsorbing, injection molded or blow molded bottles are proposed which are made from resins that exhibit little adsorption such as cyclic polyolefins.

However, such bottles are fragile due to the stiffness of cyclic polyolefins or the like. In addition, since the large amount of the resin used for making the bottles is required and the cyclic polyolefins or the like are very costly, the bottles formed from these resins become expensive. Furthermore, these bottles are not easy to crush on account of their stiffness, and thus become so bulky that these bottles cause the problem of discarding.

On the other hand, the cyclic polyolefins or the like themselves have inferior heat sealing properties, although they can be formed into films. This causes the problem that a large bag having high heat sealing strength and the storage capacity of 300 ml or higher can not be produced.

### DISCLOSURE OF INVENTION

The object of the present invention is to solve the problems which usually non-adsorptive blow molded bottles and injection molded containers have on discarding and on utilizing because of their cost, and to provide a non-adsorptive packaging bag which is readily disposable and low-priced, as well as a method for producing the same.

In order to attain the above object, the present invention provides
(1) a packaging bag comprising two resin films each having the innermost layer formed from at least one resin selected from the group consisting of polyesters, polyamides, polyacrylonitriles, polycarbonates, cyclic polyolefins and polyfluoroethylenes, wherein the two resin films are disposed in such a way that each of the two innermost layers faces each other in the inner sides thereof, at least a part of the peripheries of these two resin films adhere to each other by a peripheral adhesion section comprising a thermoplastic resin capable of melt bonding to said resin films, and
(2) a method for producing a packaging bag comprising the steps of placing two resin films each having the innermost layer formed from at least one resin selected from the group consisting of polyesters, polyamides, polyacrylonitriles, polycarbonates, cyclic polyolefins and polyfluoroethylenes in such a way that each of the two innermost layers faces each other in the inner sides thereof, and adhering at least a part of the peripheries of these two resin films to each other by a thermoplastic resin capable of melt bonding to said resin films to produce the packaging bag.

That is, the packaging bag of the present invention comprises the two resin films each having innermost layer formed from at least one resin selected from the group consisting of polyesters, polyamides, polyacrylonitriles, polycarbonates, cyclic polyolefins and polyfluoroethylenes. The two resin films are disposed in such a way that each of the two innermost layers faces each other in the inner sides thereof, and at least a part of the peripheries of these two resin films adhere to each other by a peripheral adhesion section formed from a thermoplastic resin capable of melt bonding to the resin films. Thus, a flexible packaging bag can be obtained. In addition, since the resin does not adsorb ingredients, the packaging bag hardly adsorbs ingredients of a solution filled therein as a content of bags for liquid medicines, and also does not adsorb ingredients of a solution filled therein as a content of bags for intravenous solutions containing vitamin D.

When the peripheral adhesion section is constructed so that the two resin films are bonded or adhered by covering the outermost layers of the two resin films with the peripheral adhesion section formed from the thermoplastic resin, the peripheries of the two resin films are adhered by extruding the thermoplastic resin between the peripheries of the two resin films, or the peripheries of the two resin films are adhered by disposing the peripheral adhesion section previously formed from the thermoplastic resin between the two resin films to heat pressure bond, the two resin films can be easily adhered and the packaging bag having good adhesion property and strength can be obtained.

When the packaging bag has a port which is molded so that a part of the port is sealed or presealed by means of heat sealing or ultrasonic sealing and then the port is molded and integrated with the peripheral adhesion section, there is obtained the packaging bag having good adhesion property between the port and the packaging bag and having little liquid leakage. When the port is inserted between the two resin films to heat seal them and then the resin films and the port are firmly bonded by supplying the thermoplastic resin to the outermost layers of the resin films of the peripheral portion in which at least the port is set, there can be obtained good adhesion property.

In this case, when the resin which forms the outermost layers of the two resin films is the same resin or the same kind resin as the thermoplastic resin which forms the peripheral adhesion section, the adhesion property is more improved. When the resin which forms the innermost layers of the two resin films is the same resin or the same kind resin as the thermoplastic resin which forms the peripheral adhesion section, the adhesion property is also more improved. When at least a part of the port which comes contact with the contents is formed from the same resin or the same kind resin as the resin of the innermost layer of the packaging bag, the non-adsorbing effect is more improved.

When the resin film includes a gas barrier layer, the resulting packaging bag is more suitably used as packaging bags for filling contents requiring a gas barrier property such as bags for liquid medicines.

Such a packaging bag can suitably be produced by a method that comprises the steps of facing two resin films having the innermost layers formed from at least one resin selected from the group consisting of polyesters, polyamides, polyacrylonitriles, polycarbonates, cyclic polyolefins and polyfluoroethylenes in such a way that each of the innermost layers is located inside the packaging bag, and adhering at least a part of the peripheries of the two resin films by the peripheral adhesive section of the thermoplastic resin capable of melt bonding by supplying it to the innermost layers or the outermost layers of the resin films. When resin films are formed from two or more kinds of resins, the resin forming the outermost layer of the resin film is not particularly limited, although polyolefin resins such as polyethylene or polypropylene are preferable.

In this case, as described above, the same polyolefin resin or the same type of polyolefin resins can be extruded on the outermost layers of the resin films.

By sealing the port and the resin films, and/or the two resin films with each other in advance, at least a part of them is adhered or pre-adhered to each other, thereby precisely fixing their positions each other when extruding a thermoplastic resin on the outermost layer of the resin film, and thus providing good adhesion. Furthermore, when at least a part of the two resin films are sealed in advance and then the thermoplastic resin is supplied to the outermost layers of the resin films to firmly bond the resin films, the liquid content is hardly entered between the resin films, thereby reducing the amount of adsorption even if the thermoplastic resin is one which is apt to adsorb ingredients of the contents, typically a polyolefin resin.

### BRIEF DESCRIPTION OF DRAWINGS

Fig. 1 is a schematic longitudinal view of a packaging bag showing a structural example of the packaging bag of the present invention.
Fig. 2 is an exploded perspective view showing the structure of the packaging bag.
Fig. 3 is a partly omitted sectional view showing another example of a packaging bag of the present invention.
Fig. 4 is a partly omitted sectional view showing a yet another example of a packaging bag of the present invention.
Fig. 5 is a perspective view of the packaging bags of Figs. 3 and 4.

### BEST MODE FOR CARRYING OUT THE INVENTION

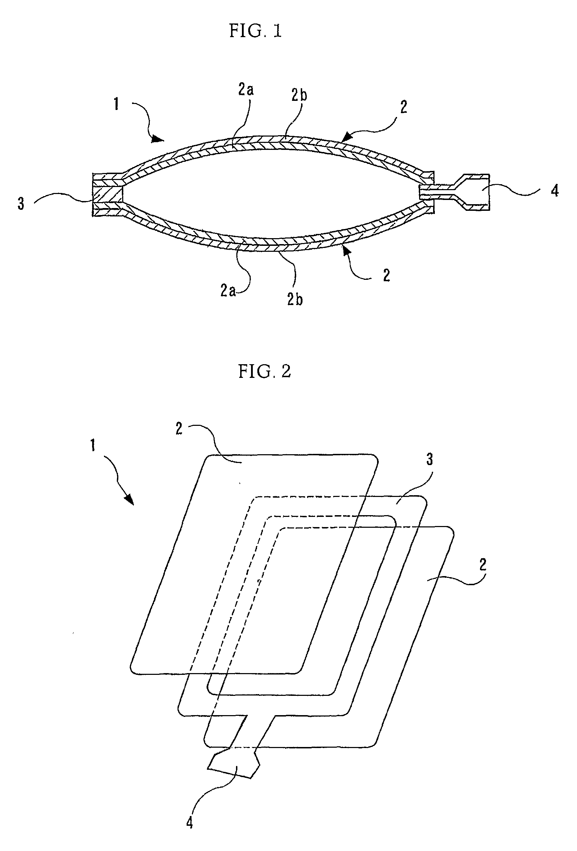

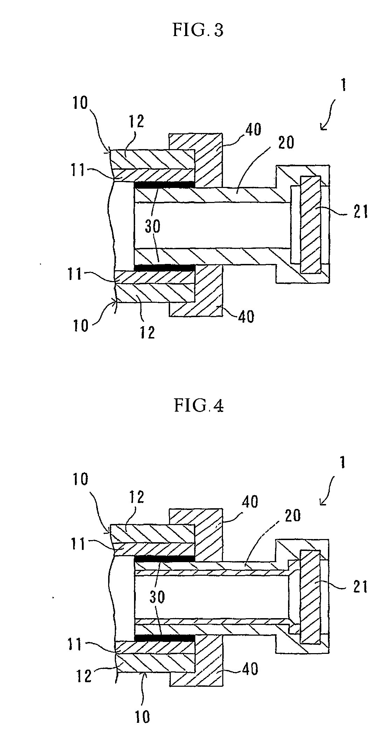

Referring to Figures, the present invention will be explained in more detail. Fig. 1 is a schematic longitudinal section of a packaging bag 1 showing one embodiment of the packaging bag of the present invention, and Fig. 2 is a typical view (exploded perspective view) of the packaging bag 1 indicating each structural element separately in order to explain the structure of the packaging bag 1. This packaging bag 1 is formed by melt bonding the peripheries of two resin films 2, 2 through a peripheral adhesion section 3 having the shape corresponding to the peripheries of the resin films. In this case, a port 4 is molded and integrated with the peripheral adhesion section 3. Figs. 3 and 4 are schematic longitudinal sections of the packaging bag 1 which shows other examples of the packaging bag of the present invention.

In the film 2, the innermost layer 2a is formed from at least one thermoplastic resin capable of preventing ingredients from adsorbing selected from the group consisting of polyesters, polyamides, polyacrylonitriles, polycarbonates, cyclic polyolefins and polyfluoroethylenes. Examples of polyesters include amorphous polyethylene telephthalate, polyethylene naphthalate and the like; examples of polyamides include nylon 6, amorphous nylon and the like; examples of cyclic polyolefins include cyclic olefin copolymers and the like; and examples of polyfluoroethylenes include polytetrafluoroetylene and the like.

Commercially available products of the cyclic polyolefins include, for example, "APEL" (trade name; cyclic olefin copolymer) from Mitsui Petrochemical Industries, Ltd., "ZEONOR" (trade name; cycloolefin polymer) from Zeon Corp. and the like; commercially available products of the polyamides include, for example, "SELAR PA" (trade name; amorphous nylon resin) from Du Pont-Mitsui Polychemicals Co., Ltd. and the like; commercially available products of the polyesters include, for example, "SELAR PT" (trade name; multi-functional polyester resin) from Du Pont-Mitsui Polychemicals Co., Ltd. and the like; commercially available products of the aforementioned polyacrylonitriles include, for example, "BAREX" (trade name; acrylonitrile-based thermoplastic resin containing acrylonitrile, acrylate and butadiene-based rubber), "ZEXLON" (trade name; the acrylonitrile-based thermoplastic sheet/film), both from Mitsui Chemicals, Inc.

The thickness of the innermost layer 2a of the resin film 2 is not particularly limited, although it is selected normally from 5 to 100 µm, preferably from 10 to 70 µm, and more preferably from 15 to 50 µm. If the thickness is too thin, the non-adsorptive property which is required for an object of the present invention may not be obtained. If the thickness of the layer is too thick, the non-adsorptive property does not improved anymore, causing an uneconomical result, and the flexibility of the packaging bag may be lost.

So long as the resin film 2 has the innermost layer 2a having the above-mentioned resin, it may be a single layer film or a laminated film that is formed by laminating another resin, metal foil, vacuum metallized layer, or the like. In case of using the bag for liquid medicines and the like, the resin film 2 desirably has a gas barrier layer 2b. In this case, it is more desirable that the gas barrier layer 2b is transparent. Resins for forming the gas barrier layer 2b are not particularly limited, although metal oxide-deposited resin films obtained by vacuum depositing a metal oxide such as silica or alumina on a resin film such as polyethylene telephthalate (PET); ethylene/vinyl alcohol copolymers (EVOH); polyvinylidene chlorides (PVDC); etc. can suitably be used. Among them, PVDC, EVOH, metal oxide-deposited PET, etc. are particularly preferred.

When the gas barrier layer 2b of the resin film 2 is formed from a metal oxide-deposited layer, the thickness of the deposited layer is not particularly limited, although it is selected normally from 300 to 1500 angstroms, preferably from 400 to 1200 angstroms, more preferably from 500 to 1000 angstroms. If the thickness of the layer is too thin, the sufficient gas barrier properties may not be obtained. If the thickness is too thick, the adhesion properties between the deposited layer and the base film may be lowered.

When the gas barrier layer 2b of the resin film 2 is formed from a resin film, the thickness is selected normally from 5 to 50 µm, preferably from 10 to 30 µm, and more preferably from 12 to 25 µm. If the layer is too thin, the sufficient gas barrier properties may not be obtained. If the thickness of the layer is too thick, the gas barrier properties do not improve any more, causing an uneconomical result, and the flexibility of the bag required for the invention may not be obtained since the resin film 2 becomes too thick.

The resin film of the present invention, for the purpose of further improving the strength, may be laminated with (a) layer(s) comprising other resin(s). The layers for the lamination may include oriented nylon films and oriented polyethylene telephthalate films. To impart flexibility to the film, (a) layer(s) comprising other resins may be laminated. As such resins, polyolefins such as polyethylene and polypropylene may be laminated as the outermost layer.

The thickness of the resin film 2 is not particularly limited, although it is selected normally from 10 to 400 µm, preferably from 40 to 300 µm, more preferably from 42 to 200 µm. If the thickness of the layer is too thin, the sufficient strength as a packaging bag may not be obtained. If the thickness is too thick, the sufficient flexibility may not be obtained.

The method for producing the resin film 2 is not particularly restricted. For a single layer, T-die extrusion or inflation can be employed. With a multi-layer by lamination, a well-known method such as co-extrusion, extrusion lamination, and dry lamination can be utilized according to the materials to be used. Suitable compositions as the resin films of the present invention and the manufacturing methods thereof will be illustrated in the following:
(1) Outermost layer (LLDPE: 20 to 200 µm)/ innermost layer (cyclic polyolefin: 15 to 50 µm), extrusion lamination or co-extrusion method;
(2) Outermost layer (LLDPE: 15 to 100 µm)/ adhesion layer (adhesive resin: 5 to 50 µm)/ innermost layer (amorphous nylon: 15 to 50 µm), extrusion lamination or co-extrusion method;
(3) Outermost layer (LLDPE: 15 to 100 µm)/ adhesion layer (adhesive resin: 5 to 50 µm)/ innermost layer (nylon 6: 15 to 50 µm), extrusion lamination or co-extrusion method;
(4) Outermost layer (LLDPE: 15 to 100 µm)/ adhesion layer (adhesive resin: 5 to 50 µm)/ innermost layer (polyester: 15 to 50 µm), extrusion lamination or co-extrusion method;
(5) Outermost layer (LLDPE: 15 to 100 µm)/ adhesion layer (adhesive resin: 5 to 50 µm)/ innermost layer (polyacrylonitrile: 15 to 50 µm), extrusion lamination or co-extrusion method;
(6) Outermost layer (LLDPE: 15 to 100 µm)/ adhesion layer (adhesive resin: 5 to 50 µm)/ innermost layer (polycarbonate: 15 to 50 µm), extrusion lamination or co-extrusion method;
(7) Outermost layer (LLDPE: 15 to 100 µm)/ adhesion layer (adhesive resin: 5 to 50 µm)/ innermost layer (polyfluoroethylene: 15 to 50 µm), extrusion lamination or co-extrusion method;
(8) Outermost layer (PET: 12 to 25 µm)/ (nylon: 15 to 50 µm)/ (LLDPE: 15 to 100 µm)/ innermost layer (cyclic polyolefin: 15 to 50 µm), dry lamination method;
(9) Outermost layer (PET: 12 to 25 µm)/ (alumina or silica deposited PET: 12 to 25 µm)/ (nylon: 15 to 50 µm)/ (polyethylene: 15 to 100 µm)/ innermost layer (cyclic polyolefin: 15 to 50 µm), dry lamination method; and
(10) Outermost layer (CPP: 15 to 100 µm)/ adhesion layer (adhesive resin: 5 to 50 µm)/ innermost layer (cyclic polyolefin: 15 to 50 µm), extrusion lamination or co-extrusion method.

As the adhesive resin, commercially available carboxylic acid-modified polyolefins such as "ADMER" from Mitsui Chemicals, Inc., "MODIC" from Mitsubishi Chemical Corp., etc. are preferably used.

Referring to Figs. 1 and 2, the peripheral adhesion section 3 is molded and integrated with the port 4. The molding resins are not particularly limited so long as the resins can be melt bonded with the innermost layer 2a of the resin film 2. From the view point of preventing ingredients from adsorbing, the resin of the innermost layer 2a preferably is the same as the above-mentioned thermoplastic resin. In the present invention, it is preferred to form the innermost layers 2a, 2a of the two resin films 2, 2, the peripheral adhesion section 3, and the port 4 with the same resin, thereby imparting excellent adhesion properties.

The peripheral adhesion section 3, as shown in Figs. 1 and 2, can be formed into the shape corresponding to the peripheral portion of the resin film 2 which was molded in advance so that the specified shape of packaging bag is formed. In this case, the width and the thickness thereof are not particularly limited, although it is preferred that the width is from about 2 to about 50 mm, and the thickness is from 5 to 3000 µm, especially from 10 to 1000 µm. If the width is too small, or if the thickness is too small, the sufficient adhesion properties may not be obtained. If the thickness is too thick, the amount of the resin to be used is increased, causing the problem of discarding. If the width is too large, it may be difficult to form a packaging bag having a sufficient storage capacity.

The shape and the size of the port 4 are not particularly limited. Any shape and any size of the port can be acceptable depending on the application of the port of the packaging bag. In the past, a packaging bag having a port is prepared by inserting a port member into one end of the packaging bag and heat fusing them. If the port member has a large thickness, it is difficult to tightly bond both side edges of the port member, thereby causing the difficulty of fusing operation. On the other hand, in the present invention, the peripheral adhesion section 3 and the port 4 can be molded and integrated, and thus such difficulty does not arise.

The method for manufacturing the packaging bag 1 is not particularly limited. For example, upon producing the packaging bag 1, the peripheral adhesion section 3 may be formed by extruding the thermoplastic resin to the peripheries of the resin films 2, 2 so that the thermoplastic resin is interposed between the resin films or put on the outer surfaces of the resin films to bind in the thermoplastic resin, thereby bonding the peripheral portions of the resin films 2, 2. Another method is that a peripheral adhesion member which is previously molded with the thermoplastic resin is disposed between the resin films 2, 2 to heat pressure bond, thereby bonding the peripheries of the resin films 2, 2. A suitable method for producing the packaging bag 1 is as follows. The two resin films 2, 2 which have been molded into a specified shape in advance are placed such that the innermost layers 2a, 2a face each other in the inner sides thereof. On the other hand, the port 4 is molded with the thermoplastic resin. In this case, the peripheral adhesion member having the shape corresponding to the inner peripheral portions of the resin films 2, 2 is molded and integrated with the port 4. The peripheral portions of the resin films 2, 2 through the peripheral adhesion section 3 is pressure bonded, thereby bonding the peripheral portions of the resin films 2, 2 to produce a packaging bag.

In case of an extrusion method, an injection molding machine capable of in-mold molding and insert molding is used as a manufacturing apparatus. The two resin films 2, 2 are disposed in such a way that the innermost layers 2a, 2a face to each other in the inner sides thereof. The molten thermoplastic resin is extruded from the injection molding machine so that the port 4 is molded to the predetermined position between the two resin films 2, 2 and at the same time the peripheral adhesion section 3 is formed between the innermost layers 2a, 2a of the resin films 2, 2, and the molten resin and the resin films 2, 2 are pressure bonded each other to adhere them, thereby producing a packaging bag having the port. In this case, a mold can not be provided in the packaging bag. By pressing the inside portion along the width of the peripheral adhesion section at the peripheries of the two resin films 2, 2, the resin can be prevented from invading in the bag, thereby ensuring the space in which a content is to be filled.

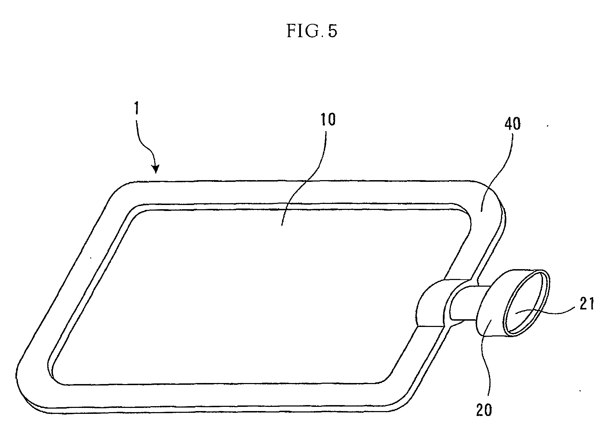

Figs. 3 to 5 show a method for forming the port, which comprises the steps of inserting the tip portion of the port 20 composed of a cyclic olefin copolymer (COC) shown in Fig. 3 or a COC inner layer and a low density polyethylene (LLDPE) outer layer shown in Fig. 4 between two resin films 10 having an inner layer 11 made of COC or the like and an outer layer 12 made of LLDPE or the like, presealing the outer surface of the inserted tip portion and the innermost layers 11 of the resin films 10 by means of heat sealing and supersonic wave sealing, and subsequently injecting a thermoplastic resin 40 such as LLDPE or the like to the outer surfaces of the outermost layers of the two resin films 10 and the outer surface of the port 20, thereby firmly bonding the port 20 (Fig. 5). The reference numeral 21 in the figures indicates a rubber stopper.

In the packaging bag 1, contents (not shown) are filled from the port 4, and then the port is sealed off to store and transport the contents. Upon using, the contents can be taken out through the port 4. Although the contents are not particularly limited, intravenous solutions containing vitamin D or the like, liquid medicines containing menthol or the like, fruit juices containing limonene or the like, etc. are effectively filled since the ingredients of the contents are hardly adsorbed to the packaging bag during storage.

The present invention is not limited the above-described structures. In order to improve the adhesion strength between the peripheries of the two resin films 2, 2 and the peripheral adhesion section 3, an adhesive resin may be laminated by a method of co-extrusion when the peripheral adhesion section 3 is molded. Elements to be molded and integrated with the peripheral adhesion section 3 are not only the port 4 but also handles for hanging the packaging bag. The shape of the packaging bag may be one in which an edge is made turn-in and two other edges are bonded, or a self-supporting bag in which the bottom is formed so that it enables to extend. The other various modifications may be acceptable without departing the gist of the present invention.

According to the present invention, two films formed from a resin which does not adsorb ingredients can be readily and firmly bonded as the innermost layers, and a port of the packaging bag formed from the above-said resin and the films can be readily and firmly bonded as well. Thus, the packaging bag of the present invention enables to form all the surfaces coming in contact with contents from the resin which does not adsorb ingredients, and thus is particularly useful as packaging bags for filling liquid contents containing adsorptive components such as bags for liquid medicines. Furthermore, the packaging bag is flexible and thus not bulky, easy to discard and inexpensive. Such packaging bags can be suitably prepared according to the method for producing a packaging bag of the present invention.

## Claims

1. A packaging bag comprising two resin films each having the innermost layer formed from at least one resin selected from the group consisting of polyesters, polyamides, polyacrylonitriles, polycarbonates, cyclic polyolefins and polyfluoroethylenes,
said two resin films being disposed in such a way that each of the two innermost layers faces each other in the inner sides thereof, and
at least a part of the peripheries of said two resin films adhering to each other by a peripheral adhesion section comprising a thermoplastic resin capable of melt bonding to said resin films.

2. A packaging bag according to claim 1, which has a port.

3. A packaging bag according to claim 2, wherein said port is molded and integrated with said peripheral adhesion section.

4. A packaging bag according to claim 2 or 3, wherein at least a part of said port is inserted between said two films.

5. A packaging bag according to any one of claims 2 to 4, wherein at least a part of the port which comes in contact with a content filled therein is formed from the same resin or the same type of resins as that of the innermost layer of said packaging bag.

6. A packaging bag according to any one of claims 2 to 5, wherein said port and said resin films, and/or said two resin films are sealed with each other in advance.

7. A packaging bag according to any one of claims 1 to 6, wherein said peripheral adhesion section is formed from a thermoplastic resin extruded on the outermost layer and/or the innermost layer of said two resin films.

8. A packaging bag according to claim 1 or 2, wherein the peripheral adhesion section is formed by disposing a peripheral adhesion member previously molded from the thermoplastic resin between said two resin films, and heat pressure bonding them to adhere a part of the peripheries of said two resin films.

9. A method for producing a packaging bag, comprising the steps of,
placing two resin films each having the innermost layer formed from at least one resin selected from the group consisting of polyesters, polyamides, polyacrylonitriles, polycarbonates, cyclic polyolefins and polyfluoroethylenes in such a way that each of the two innermost layers faces each other in the inner sides thereof, and
adhering at least a part of the peripheries of said two resin films to each other by a thermoplastic resin capable of melt bonding to said resin films to produce the packaging bag.

10. A method for producing a packaging bag according to claim 9, wherein said thermoplastic resin is extruded on the outermost layer and/or the innermost layer of said two resin films.

11. A method for producing a packaging bag according to claim 10, wherein
a port is inserted between said resin films and heat sealing them, and then
said resin films and said port are firmly bonded by supplying the thermoplastic resin to the outermost layers of said resin films of the peripheral portion in which at least the port is set.

12. A method for producing a packaging bag according to claim 10 or 11, wherein
at least a part of the two resin films is heat sealed, and then
said resin films are firmly bonded by supplying the thermoplastic resin to the outermost layer of said resin films.

13. A method for producing a packaging bag according to claim 10, wherein
a peripheral adhesion member which has been molded in advance with a thermoplastic resin is disposed between said two resin films to heat pressure bond them.
